# EUROPEAN PATENT APPLICATION

(11) **EP 4 773 120 A1**
(43) Date of publication of application: **08.07.2026**
(21) Application number: 25833248.5
(22) Date of filing: 11.06.2025
(51) Int. Cl.: G09B 9/00, G09B 19/24, G09B 5/08, G09B 5/02, G06F 3/01, G06F 3/0482, H01M 10/42

(54) **BATTERY CELL ASSEMBLY PROCESS SIMULATION SYSTEM**

(30) Priority: 01.07.2024 KR 20240086449
(71) Applicant: LG Energy Solution, Ltd., Seoul 07335 (KR)
(72) Inventor: KIM, Daecheon, Daejeon 34122 (KR); PARK, Dae Hyun, Daejeon 34122 (KR); KIM, Jongseong, Daejeon 34122 (KR); KIM, Eung Seo, Daejeon 34122 (KR)
(74) Representative: Goddar, Heinz J.
(86) International application number: PCT/KR2025/007954
(87) International publication number: WO 2026/010189

(57) **Abstract**

Provided are a battery cell assembly process simulation system and an operating method thereof capable of efficiently train new trainees on actual process equipment without affecting the operation of actual process equipment. The system includes: a server storing basic information and training information about a training equipment comprising a training target battery cell process equipment, and work history of a participating trainee; a terminal providing the training information to the participating trainee; an input interface provided at the terminal for inputting information of the participating trainee; and a training contents selection logic extracting a work history of a corresponding trainee corresponding to inputted information of the trainee and constructing a training curriculum to be provided to the terminal based on an extracted work history.

## Description

### [TECHNICAL FIELD]

This application claims the benefit of priority based on Korean Patent Application No. 10-2024-0086449 filed on July 1, 2024, entire content disclosed in the document of the patent applications is included as a part of this specification.

The present invention relates to a battery cell assembly process simulation system, and more specifically, to a battery cell assembly process simulation system capable of efficiently train new trainees on actual process equipment without affecting the operation of actual process equipment.

### [BACKGROUND ART]

As the demand for secondary batteries is rapidly increasing, the installation and operation time of secondary battery production equipment are increasing. Although a considerable level of automation has been achieved for production equipment, management based on manpower is still required. Therefore, new manpower is continuously being invested in the expanded equipment. In this trend of increasing equipment installation and operation time to respond to product demand, training trainees based on actual equipment inevitably limits the operation time of equipment, which is against the purpose of increasing equipment to respond to product demand.

Accordingly, a simulation system is being developed to implement equipment to the extent that it is comparable to actual equipment in virtual reality and to train trainees. Such simulation system is implemented by virtually implementing all equipment for manufacturing a certain product. Such simulation system has a positive effect in that the operation of the actual equipment is not affected.

However, the conventional simulation system consisting of a uniform training scenario does not reflect the individual characteristics of the trainees participating in the training. For example, it is inefficient in terms of manpower utilization to conduct training with the same training scenario for a trainee who is encountering the training target equipment for the first time and a trainee who already has experience with equipment of a similar product group.

In addition, since there is a lot of content to be trained according to the uniform training scenario, the speed of improvement in work proficiency is slow compared to that of the trainee who received training in the actual process equipment even when the trainee who received this training is assigned to the management work of the actual production equipment.

### [DISCLOSURE]

### [TECHNICAL PROBLEM]

In order to solve above-described problems, it is an object of the present invention to provide a battery cell assembly process simulation system with improved training efficiency by providing a training scenario that reflects the individual characteristics of the trainee.

It is an object of the present invention to provide a battery cell assembly process simulation system capable of producing results similar to those of apprenticeship training in actual process equipment.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The battery cell assembly process simulation system of the present invention for solving the above-described problem may be used to train trainees working on a cylindrical can type battery cell assembly process. However, the type of product is not limited thereto.

The battery cell assembly process simulation system includes: a server storing basic information and training information about a training equipment including a training target battery cell process equipment, and work history of a participating trainee.

The training equipment may include at least one of battery cell process equipment such as electrode assembly supply equipment, electrode assembly and collector plate welding equipment, electrode assembly insulation taping equipment, insulator insertion equipment, electrode terminal riveting equipment, electrode assembly insertion equipment, can beading processing equipment, collector plate and beading welding equipment, X-ray inspection equipment, electrolyte injection equipment, can crimping processing equipment, cleaning equipment, CT inspection equipment, exterior inspection equipment, and battery cell performance test equipment.

The server may further store existing equipment information about an existing battery cell process equipment. The existing equipment may include at least one of electrode assembly supply equipment, first insulator insertion equipment, electrode assembly insertion equipment, second insulator insertion equipment, can beading processing equipment, X-ray inspection equipment, electrolyte injection equipment, electrode tab welding equipment, can crimping processing equipment, cleaning equipment, marking equipment, and battery cell performance test equipment.

The basic information about the training equipment may include whether a corresponding training equipment is: an equipment identical to the existing equipment; an equipment partially changed from the existing equipment; and new equipment.

The training information about the training equipment may include: a new training information based on the premise that the training equipment is the new equipment; and a changed training information based on the premise that the training equipment is the equipment partially changed from the existing equipment.

The work history of the trainee stored in the server may include an experience information about whether an experience with an existing equipment exists.

The training information may include at least one of: a description of a process performed by the training equipment; a description of an equipment structure; a description of a method of operating the equipment; a description of a quality inspection; and information about executing a condition change of the equipment.

The training information may include: information about 3D modeling the training equipment to correspond to actual equipment and implementing motions to correspond to operations of the actual equipment.

The battery cell assembly process simulation system includes: a terminal providing the training information to the participating trainee; and an input interface provided at the terminal for inputting information of the participating trainee.

The terminal may include a display that allows the trainee to visually check the training information and an audio device that allows the trainee to audibly check the training information.

The input interface may include a character input interface, a voice input interface, a biometric authentication information input interface, etc. The biometric authentication information may include fingerprint, face, or voice information.

The battery cell assembly process simulation system may include a training contents selection logic extracting a work history of a corresponding trainee corresponding to inputted information of the trainee and constructing a training curriculum to be provided to the terminal based on an extracted work history.

The selection logic may be a software program. The selection logic may be executed in the server or the terminal.

In a partial embodiment, a training curriculum is constructed in the server, and the server may provide training information corresponding to the constructed curriculum to the terminal.

In a partial embodiment, a training curriculum is constructed in the terminal, and the terminal may request training information corresponding to the constructed curriculum from the server, and the server may provide the requested training information to the terminal.

The training contents selection logic may provide the changed training information as the training information about the training equipment partially changed from the existing equipment when it is confirmed that the trainee has experience with the existing equipment based on the experience information of the participating trainee.

The training information may include: a description of product parameters to be managed by training equipment; a description of a situation occurring when the product parameters are out of a management range; and a description of a method for managing the product parameters.

The training information may include information about the results of product parameters that are out of the management range.

The operating method of a simulation system includes: receiving information about a trainee; extracting a work history of the trainee corresponding to received information; constructing a training curriculum by selecting training information for the training equipment based on extracted work history; and providing constructed training curriculum to a terminal for training of the trainee.

The information of the trainee may be inputted through the input interface of the terminal. The inputted information of the trainee may be transmitted to the server.

The server may extract the work history of the trainee corresponding to the received information.

In a partial embodiment, the server may construct a training curriculum based on the extracted work history. The training curriculum may be constructed by selecting appropriate training information based on the work history of the trainee among the training information for the training equipment stored in the server. The server may provide the training information corresponding to the constructed training curriculum to the terminal.

In a partial embodiment, the server may send the extracted work history of the trainee to the terminal, and the terminal may construct a training curriculum based on the received work history. The training curriculum may be constructed by selecting appropriate training information based on the work history of the trainee among the training information for the training equipment stored in the server. The terminal may request the training information corresponding to the constructed training curriculum from the server. The server may provide the requested training information to the terminal.

In constructing the training curriculum, for the training equipment that is identical to the existing equipment and that the trainee has experience on, the training curriculum may be constructed for providing: information that the training equipment is identical to the existing equipment based on the work history of the trainee; and an option to select whether to complete a training for the training equipment.

In constructing the training curriculum, the training curriculum may be constructed by, for the training equipment that is partially changed from the existing equipment that the trainee has experience on based on the work history of the trainee, selecting the changed training information based on the premise that the training equipment is the equipment partially changed from the existing equipment.

The training curriculum may be constructed by, for the training equipment that is identical to or partially changed from the existing equipment that the trainee does not have experience on based on the work history of the trainee, selecting the new training information based on the premise that the training equipment is the new equipment.

The training curriculum may be constructed by, for the new equipment, selecting the new training information based on the premise that that the equipment may be the new equipment.

The training information may include a description of product parameters to be managed by the training equipment, a description of a situation occurring when the product parameters are out of a management range, and a description of a method for managing the product parameters.

The training information may further include training for the trainee to exercise a management method to bring the product parameters into the management range when the product parameters are out of the management range.

The training information may further include providing: a result data on whether the product parameters are within the management range as a result of the trainee exercising the management method; and a result data on an effect of a resulting product obtained by a process resulting from the management method exercised by the trainee on another process.

### [ADVANTAGEOUS EFFECTS]

According to the battery cell assembly process simulation system and the operating method thereof of the present invention, it is possible to train trainees without affecting the operation of actual equipment.

According to the present invention, it is possible to train trainees in advance before the actual equipment is constructed such that the equipment may be operated smoothly as soon as the construction of the equipment is completed.

According to the present invention, customized training is performed according to the work experience of the trainee such that the training period of the trainee may be shortened and the training efficiency may be increased.

According to the present invention, the product parameter management ability of the trainee may be improved in advance, and problems that may occur according to the training results may be visually provided to the trainee such that the training effect equivalent to that of apprenticeship training may be achieved through virtual training.

In addition to the advantageous effects described above, specific effects of the present invention will be described further while describing specific details of the present invention.

### [BRIEF DESCRIPTION OF DRAWINGS]

FIG. 1 is a perspective view of a cylindrical battery cell which is an example of a battery cell to which an assembly process simulation system of the present invention is applied.
FIG. 2 is a perspective view of an electrode assembly embedded in the cylindrical battery cell of FIG. 1.
FIG. 3 is a perspective view illustrating a welding process of an anode current collector plate and a cathode current collector plate to the electrode assembly of FIG. 2.
FIG. 4 is a perspective view illustrating a process of attaching an insulating tape to the circumference of the electrode assembly of FIG. 3 adjacent to of the anode current collector plate.
FIG. 5 is a perspective view and a cross-sectional view illustrating a process of inserting an insulator into a can of the cylindrical battery cell of FIG. 1.
FIG. 6 is a perspective view illustrating a process of installing an electrode terminal into the can of FIG. 5.
FIG. 7 is a perspective view and a cross-sectional view illustrating a process of inserting the electrode assembly into the can.
FIG. 8 is a cross-sectional view illustrating a process of subjecting the can to a beading process.
FIG. 9 is a cross-sectional view illustrating a process of subjecting a beading processed can having an opening covered with a vent cap to a crimping process.
FIG. 10 illustrates an embodiment of an assembly process simulation system according to the present invention.
FIG. 11 is a diagram illustrating existing equipment, training equipment, and relationships therebetween.
FIG. 12 illustrates history information about trainees stored in the server.
FIG. 13 illustrates a simulation of 3D modeling for process equipment displayed on a display.
FIG. 14 illustrates a simulated HMI displayed on a display.
FIG. 15 illustrates simulated vision for dimensional measurement and simulated sensor measurement information displayed on a display.
FIG. 16 illustrates a simulated production execution system displayed on a display.
FIG. 17 illustrates a description video for product parameters displayed on a display.
FIG. 18 illustrates the results of the process executed according to the equipment execution conditions set by the trainee as the first condition and the video regarding the results of the subsequent process displayed on the display.
FIG. 19 illustrates the results of the process executed according to the equipment execution conditions set by the trainee as the second condition and the video regarding the results of the subsequent process displayed on the display.
FIG. 20 is a flow chart illustrating an operating method of the simulation system according to the present invention.
FIG. 21 is a flow chart illustrating a specific method for a training curriculum construction of FIG. 20.

### [DESCRIPTION OF REFERENCE NUMERALS]

10: cylindrical battery cell
11: electrode assembly
111: beading
112: crimped portion
12: anode current collector plate
13: cathode current collector plate
14: insulating tape
15: can
16: insulator
17: anode
18: vent cap
20: server
30: terminal
31: display
32, 33: audio device
35: character input interface
36: voice input interface
37: biometric authentication information input interface

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural. The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Herein, when a component (e.g., a first component) is referred to as being "connected," "coupled," or "connected" to another component (e.g., a second component) with or without the terms "functionally" or "communicatively," or is referred to as being "coupled" or "connected," it means that the component may be connected to another component directly (e.g., wired or wirelessly), or indirectly (e.g., through a third component).

The method according to various embodiments disclosed herein may be provided in a computer program product. The computer program product may be traded between a seller and a buyer as a commodity. The computer program product may be distributed in the form of a machine-readable storage medium (e.g., a compact disc read only memory, a CD-ROM), or may be distributed online (e.g., downloaded or uploaded) through an application store or directly between two user devices. In the case of online distribution, at least a part of the computer program product may be temporarily stored or temporarily generated in a device-readable storage medium such as a memory of a manufacturer's server, an application store's server, or an intermediary server.

According to the embodiments disclosed herein, each component (e.g., a module or a program) of the described components may include a single or multiple entities, and some of the multiple entities may be separately arranged in other components. According to the embodiments disclosed herein, one or more of the components or operations of the above-described corresponding components may be omitted, or one or more other components or operations may be added. Alternatively or additionally, a plurality of components (e.g., modules or programs) may be integrated into a single component. In such case, the integrated component may perform one or more functions of each of the plurality of components identically or similarly to those performed by the corresponding component of the plurality of components prior to the integration. According to the embodiments disclosed herein, the operations performed by the modules, programs or other components may be executed sequentially, in parallel, repeatedly, or heuristically, or one or more of the operations may be executed in a different order, omitted, or one or more other operations may be added.

Hereinafter, a preferred embodiment of a battery cell assembly process simulation system and an operating method thereof according to the present invention will be described in detail with reference to the attached drawings.

The battery cell assembly process simulation system is used to train workers who perform battery cell assembly processes as their tasks.

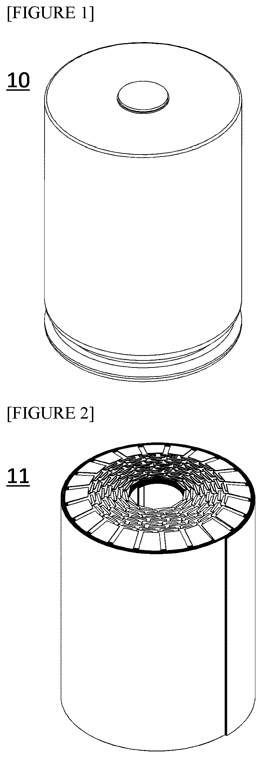

The battery cell that is the target of the assembly process exemplified in the embodiment may be the cylindrical battery cell 10 illustrated in FIG. 1. The cylindrical battery cell 10 may have a form factor of, for example, 46800 or 46950.

In order to manufacture the cylindrical battery cell 10, an electrode assembly 11 wound in a jelly-roll shape as shown in FIG. 2 is supplied. At the two axial ends of the electrode assembly 11, non-coated portions of the current collectors of the two electrodes without active material applied thereon are provided in a protruding and bent radially inward shape.

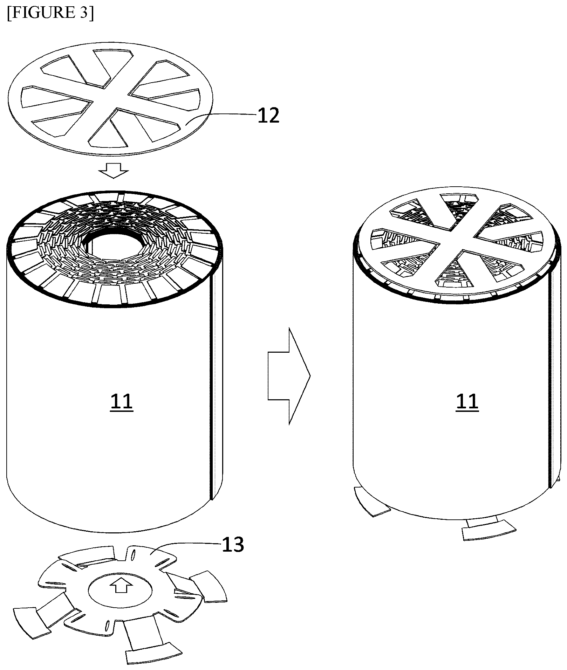

At the two axial ends of the supplied electrode assembly 11, an anode current collector plate 12 and a cathode current collector plate 13 are welded as shown in FIG. 3.

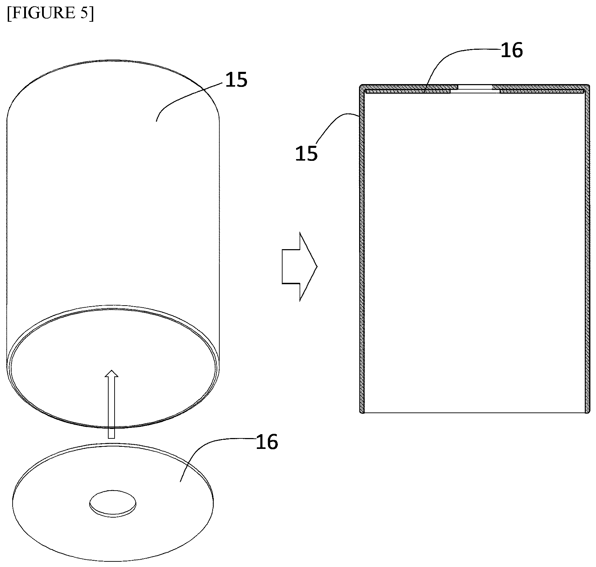

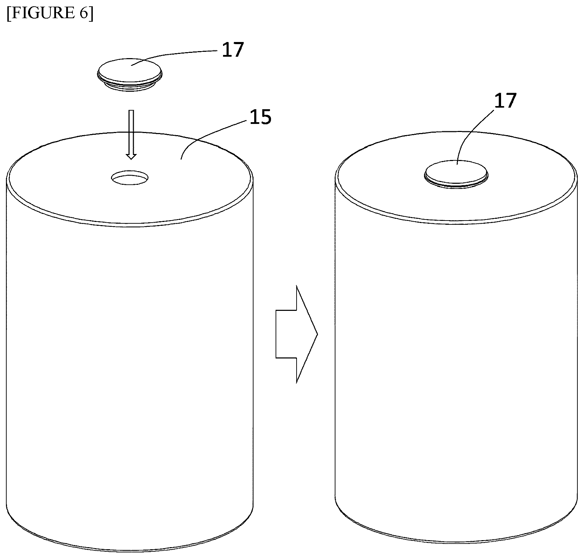

As shown in FIG. 5, an insulator 16 is inserted into a can 15 of the cylindrical battery cell 10. Thereafter, as shown in FIG. 6, an anode 17 is riveted into a through hole provided in the axial end wall of the can 15 of the cylindrical battery cell 10 with a gasket interposed therebetween.

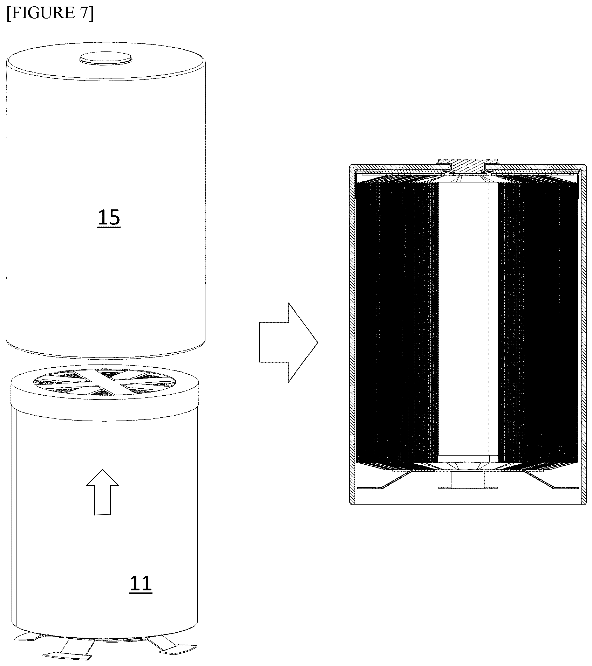

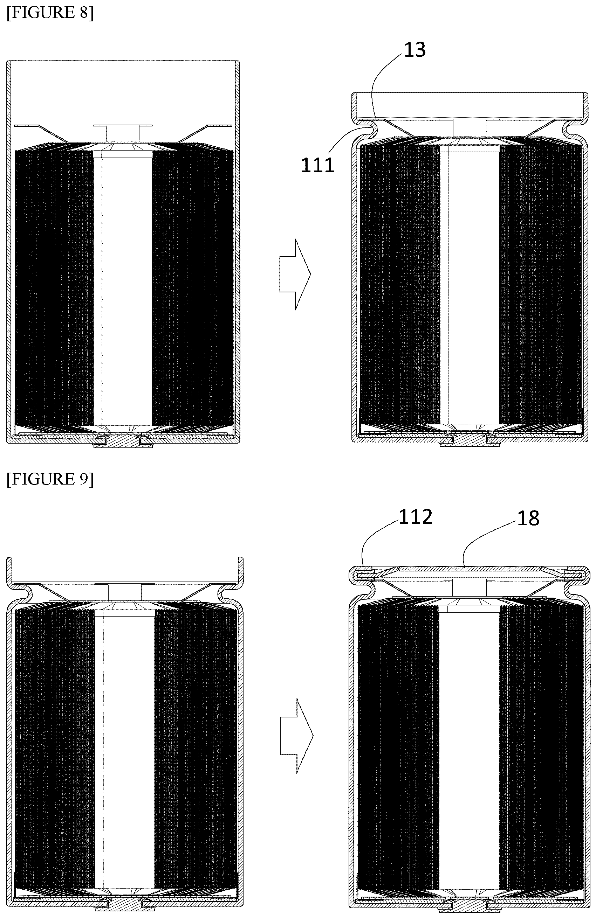

Next, as shown in FIG. 7, a process of inserting the electrode assembly 11 into the can 15 is performed. The can 15 into which the electrode assembly 11 is inserted is inverted as shown in FIG. 8, and the side wall of the can 15 may be beaded. The edge of the cathode current collector plate 13 is welded to a beading 111 of the can 15 that has been subjected to a beading process, and an electrolyte solution is injected into the inside of the can 15.

Next, as shown in FIG. 9, the opening of the can 15 is covered with a vent cap 18 with a gasket therebetween, and the edge of the can 15 is crimped to form a crimped portion 112.

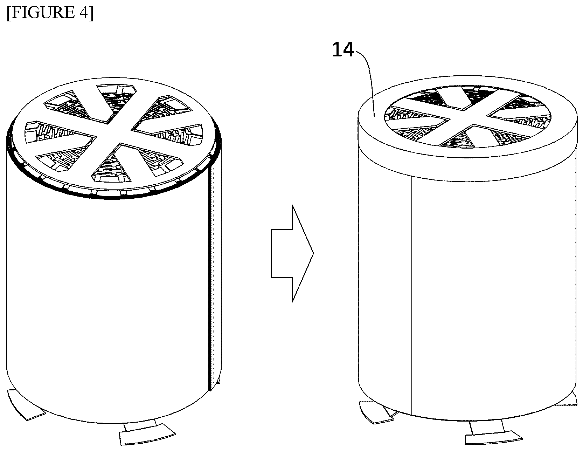

Equipment for performing a process for assembly of the cylindrical battery cell 10 includes electrode assembly supply equipment performing the process illustrated in FIG. 2, electrode assembly and collector plate welding equipment performing the process illustrated in FIG. 3, electrode assembly insulation taping equipment performing the process illustrated in FIG. 4, insulator insertion equipment performing the process illustrated in FIG. 5, electrode terminal riveting equipment performing the process illustrated in FIG. 6, electrode assembly insertion equipment performing the process illustrated in FIG. 7, can beading processing equipment performing the process illustrated in FIG. 8, collector plate and beading welding equipment, X-ray inspection equipment, electrolyte injection equipment, can crimping processing equipment performing the process illustrated in FIG. 9, cleaning equipment, CT inspection equipment, exterior inspection equipment, and battery cell performance test equipment.

In response, training equipment constructed for process equipment that is the target of training among the assembly process equipments may include all of the equipments or may selectively include equipment that requires training.

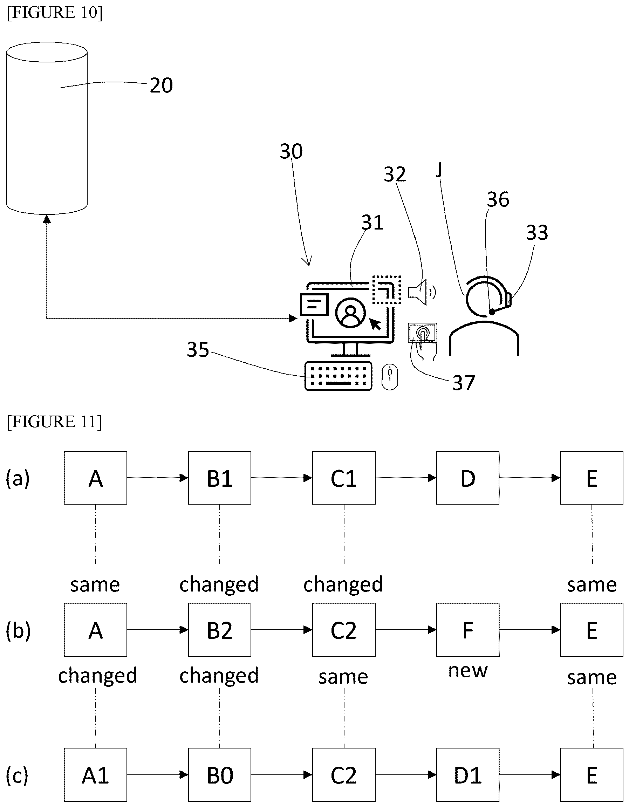

Referring to FIG. 10, the battery cell assembly process simulation system includes a server 20 where information about the training equipment is stored.

The server 20 may further store existing equipment information about existing battery cell assembly process equipment. The existing battery cell may be a cylindrical battery cell having a form factor of 21700. In addition, the existing equipment corresponding thereto may include at least one of electrode assembly supply equipment, lower portion insulator insertion equipment for the can, electrode assembly insertion equipment for the can, upper insulator insertion equipment for the can, can beading processing equipment, X-ray inspection equipment, electrolyte injection equipment, electrode tab welding equipment, can crimping processing equipment, cleaning equipment, marking equipment, and battery cell performance test equipment.

In addition, the existing battery cell assembly process equipment may further include assembly process equipment for a cylindrical battery cell having a form factor of 18650.

Information about the training equipment includes basic information and training information.

The basic information includes whether training equipment is: an equipment identical to the existing equipment; an equipment partially changed from the existing equipment; and new equipment.

For example, referring to FIG. 11, the training equipment (b) may include five equipments, for example, A, B2, C2, F and E, the existing equipment (a) related to the 21700 battery cell may include five equipments, for example, A, B1, C1, D and E, and the existing equipment (c) related to the 18650 battery cell may include five equipments, for example, Al, B0, C2, D1 and E. In such case, the basic information about the training equipment (b) may represent that the A equipment is identical to the existing equipment (a) and is partially changed from the existing equipment (c), the B2 equipment is partially changed from the existing equipment (a) and the existing equipment (c), the C2 equipment is partially changed from the existing equipment (a) and is identical to the existing equipment (c), F equipment is a new equipment that is not present before, and the E equipment is identical to the existing equipment (a) and the existing equipment (c).

Here, the term "identical" does not mean strictly identical, but may be understood as meaning that the content to be learned when training for the relevant equipment is substantially the same as the content to be learned when training for the existing equipment. In addition, the term "partially changed" may be understood as meaning that some of the content to be learned when training for the relevant equipment overlaps with the content to be learned for existing equipment, and some is new content that is not in the content to be learned for existing equipment or content that may be explained by comparing the same with the content to be learned for existing equipment.

Training information for the identical training equipment may include different versions of training information. For example, the different versions of training information may include a new version of training information based on the premise that the training equipment is new equipment and an updated version of training information based on the premise that the equipment is partially changed from the existing equipment.

For example, referring to FIG. 11, the training information version for B2 equipment among training equipment (b) may include a new version of training information based on the premise that B2 equipment is new equipment, an updated version of training information that focuses on the differences between B2 equipment and B1 equipment of existing equipment (a), and a updated version of training information that focuses on the differences between B2 equipment and B0 equipment of existing equipment (c). The training information version for F equipment among training equipment (b) may include a new version of training information based on the premise that F equipment is new equipment. The training information version for E equipment among training equipment (b) may include a new version of training information based on the premise that E equipment is new equipment.

In the server 20, information about the trainees participating in the training is stored. The information may be continuously updated. The trainee information includes the trainee's work history information. The trainee's work history stored in the server includes information about whether or not the trainee has experience with the existing equipment.

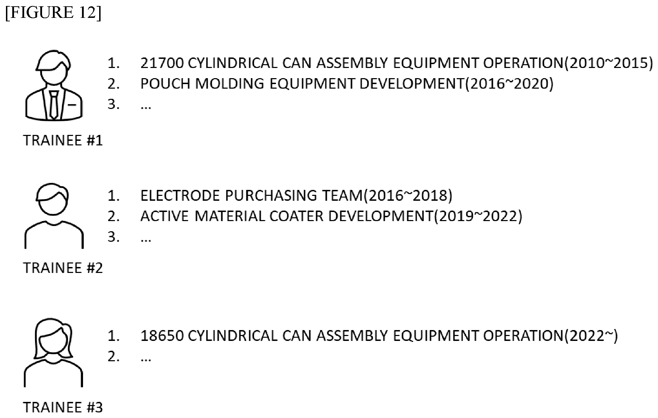

For example, referring to FIG. 12, the work history information of trainee #1 includes information that the trainee #1 has experience with 21700 battery cell assembly equipment, the work history information of trainee #2 includes information that trainee #2 does not have experience with the existing equipment, and the work history information of trainee #3 includes information that the trainee #3 has experience with 18650 battery cell assembly equipment.

Referring to FIG. 10, the battery cell assembly process simulation system according to the embodiment includes a terminal 30 providing training information to a participating trainee J. The trainee J may virtually experience and learn the manufacturing process of the battery cell through interaction with the terminal 30.

The server 20 may manage the training information provided to the trainee J by the terminal 30. The server 20 may store the training information performed by the trainee J through the terminal 30, calculate statistical data based on the training information, add or change the training information based on the statistical data, and transmit the training information to the terminal 30. The server 20 may install or update the training information management software on the terminal 30.

The terminal 30 is connected to the server 20 to transmit and receive information through a known communication protocol. The terminal may include a display 31 through which the trainee J may visually check the training information and audio devices 32 and 33 through which the trainee may audibly check the training information.

The terminal 30 includes an input interface through which the participating trainee may input information. The input interface may include a character input interface 35 including a keyboard, a mouse, a touch panel, etc., a voice input interface 36 including a microphone, a biometric authentication information input interface 37 including a camera and a fingerprint recognition device, etc. The biometric authentication information may include fingerprint, face, or voice information.

The trainee J may input information about himself/herself through the input interface. In addition, the trainee may interact with the terminal 30 through the input interface. The trainee J generates operation inputs in the form of touch input, button input, mouse input, voice input, etc., and the input interface may receive the operation inputs of the trainee J. The received operation inputs may be used for operating the terminal 30, selecting items, adjusting process conditions, etc.

The terminal 30 may include a processor and memory for executing simulation software.

The processor may have a structure for executing commands that embody operations of the terminal 30. The processor may be implemented as an array of a plurality of logic gates or a general-purpose microprocessor for processing various operations, and may be constituted by a single processor or multiple processors. For example, the processor may be implemented in the form of at least one of a microprocessor, a CPU, a GPU and an AP.

The memory or storage may be configured to temporarily store data or commands, and may be configured to be separate from or integrated with the processor. The processor may process various operations by executing commands stored in the memory and/or storage. The memory and/or storage may store various data, commands, mobile applications, computer programs, etc. For example, the memory and/or storage may be implemented as a nonvolatile device such as ROM, PROM, EPROM, EEPROM, flash memory, PRAM, MRAM, RRAM, FRAM, etc., or a volatile device such as DRAM, SRAM, SDRAM, PRAM, etc., and may be implemented in the form of HDD, SSD, SD, Micro-SD, etc., or a combination thereof.

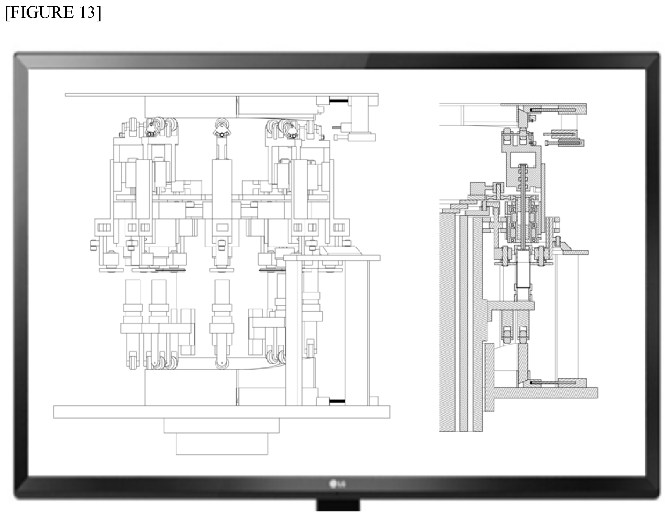

The display 31 may provide various visual information to the trainee J. The display 31 may display a simulation image of the training equipment running on the terminal 30 as shown in FIGS. 13 to 16.

For example, when the assembly process of a cylindrical battery cell is virtually simulated in the terminal 30, the display 31 may display images of the exterior and operation of the corresponding process equipment that may be recognized with the naked eye by simulating the actual equipment as shown in FIG. 13. In addition, the display 31 may also display images of the non-visible areas of the corresponding process that cannot be recognized with the naked eye.

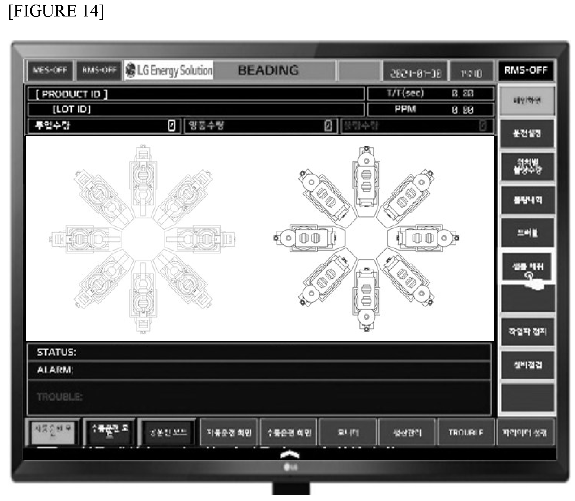

In addition, the display 31 may output images simulating the equipment operation panel used in the actual production line as shown in FIG. 14, and the operating method may also be embodied in the same manner as the operating method of the actual equipment operation panel through the input interface.

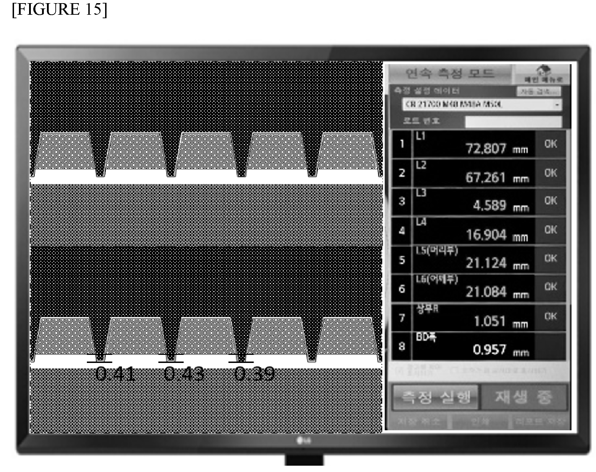

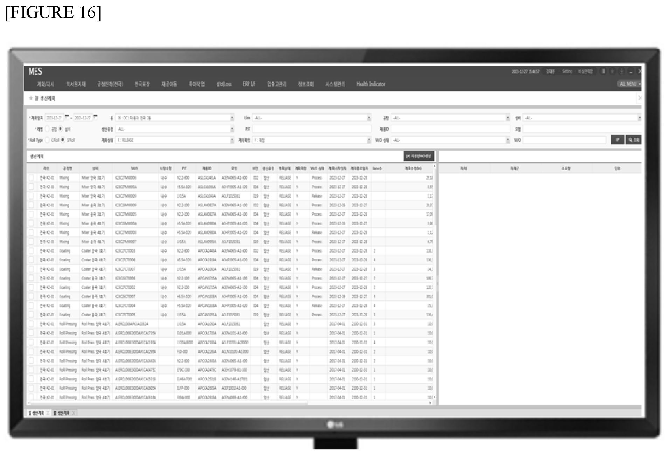

In addition, the display 31 displays images simulating the vision and sensor measurement screen, the dimension measurement screen, etc. as shown in FIG. 15, and displays images simulating the production execution system as shown in FIG. 16.

Terminal 30 provides training information to trainee J that reproduces the assembly process of the battery cell based on the operation input of the trainee J through the input interface. For example, a training simulation that reconstructs the actual assembly process of the cylindrical battery cell identically through the operation input is executed.

Terminal 30 may interact with trainee J to provide training information to trainee J. For example, for the can beading process, trainee J may experience the training information for the process of forming the crimped portion 112 through the plastic processing of can 15 as a virtual reality embodied as a 3D image as shown in FIG. 13. Here, the trainee J may virtually experience the operation of the beading processing equipment by providing operation input through the input interface. Referring to FIG. 14, the display and input interface may be implemented by simulating the operation panel of the actual beading processing equipment, and the input method and operation input may also be implemented to be inputted to correspond with the actual equipment.

The display 31 of the terminal 30 is configured to display a detailed image based on the characteristics of the training information. For example, in the quality inspection training information through dimension measurement, a detailed image regarding the dimension measurement of the measurement target may be displayed on the display 31 as shown in FIG. 15, and, for example, in the training information regarding the condition change execution of the equipment, an image regarding the production execution system may be shown on the display 31 as shown in FIG. 16.

Referring to FIG. 13, the training information includes information that 3D models the training equipment to correspond to the actual equipment and implements motion to correspond to the operation of the actual equipment. The training information may be configured as a camera view corresponding to the movement line and line of sight of the trainee for equipment operation and inspection. Such training information may include information about 17 process equipments and information about 7 material input equipments.

The 3D modeling and motion are implemented not only for the equipment, but also for the product processed by the equipment. Accordingly, the training information also includes information about the shape change of the product according to the progress of the process. The motion is implemented from the start to the end of the process.

Referring to FIG. 14, the training information includes MHI (human machine interface) for virtually implemented equipment operation. the training information includes image information for displaying the actual MHI as it is on the display 31, and information for implementing input interfaces for operating and stopping the equipment, input interfaces for manual operation of the equipment, and input interfaces for sampling through the touch panel and software of the display 31.

Referring to FIG. 15, the training information includes information about vision and sensor measurement screens, dimension measurement screens, etc. This may be implemented by simulating actual vision and sensors.

Referring to FIG. 16, the training information includes information about the manufacturing execution system (MES). This may be implemented with the same image as the actual manufacturing execution system.

The training information about the training equipment includes a description of the process performed by the training equipment, a description of the equipment structure, a description of the method of operating the equipment, a description of quality inspection, and information about executing condition changes of the equipment. In addition, the training information includes process and equipment guide information including a description for operating the equipment, and a virtual scenario for training to operate or inspect the quality of the equipment.

The training information includes a level test procedure for improving the trainee's work proficiency. The training information may include a virtual scenario for training to adjust the conditions of the process, a virtual scenario for training to determine a defect in the process, a virtual scenario for training to deal with a defect in the process, etc.

The training information includes at least one of the guide information for the assembly process of the cylindrical battery cell, equipment operation information, quality inspection information, and process condition adjustment information. The process guide information describes the assembly processes of the cylindrical battery cell. The trainee may be virtually trained in individual assembly processes and assembly procedures through 3D simulation and motion. The equipment operation information includes information about the operation, maintenance and management of process equipments required to perform the assembly processes. The quality inspection information may include information for virtually experiencing the process of inspecting the quality of products that have completed each process.

The process condition adjustment information may include information for adjusting the process conditions or process requirements required for the assembly processes and checking changes in products that have completed the process in response thereto. The terminal 30 displays visual information about the change in the process object according to the process being performed thereon on the display 31 in response to the input of the trainee J. For example, the terminal 30 may receive input from trainee J through input interface, change the assembly status of virtual battery cell according to the input, and display the changed assembly status to trainee J.

The training information includes a description of product parameters to be managed by training equipment, a description of a situation that occurs when the product parameters are out of the management range, and a description of a management method for the product parameters, and may include information about the result of the product parameter being out of the management range.

Additionally, the training information may include a training procedure in which trainee J implements a management method to bring the product parameters into the management range when the product parameters are out of the management range.

In addition, the training information may include result data on whether product parameters are brought into the management range as a result of trainee J implementing the management method, and result data on the impact of the product processed as a result of the trainee implementing the management method on other processes.

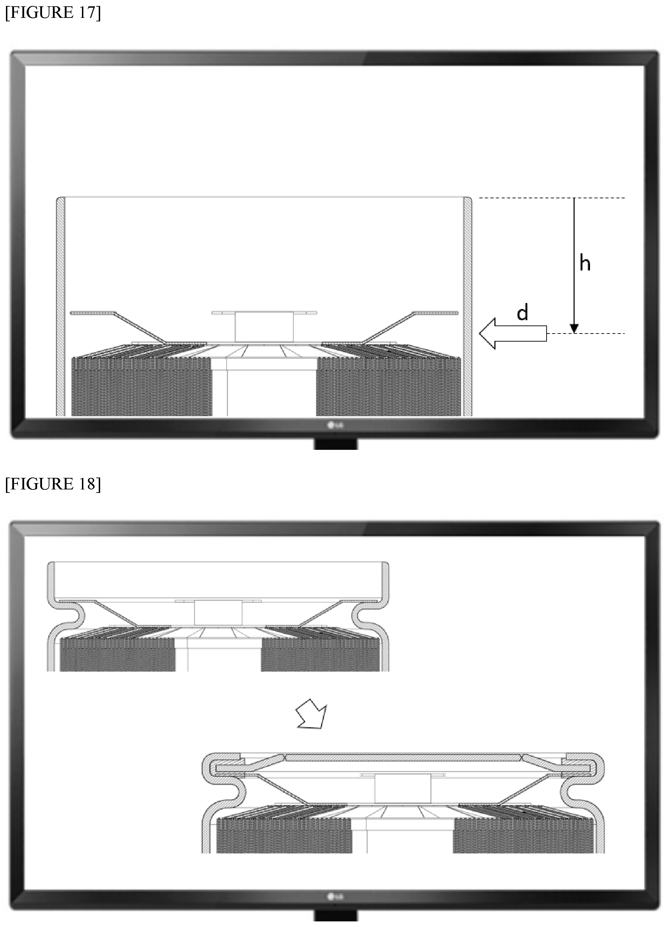

For example, referring to FIG. 17, the training information explains the height (h) setting of the beading knife and the forward depth (d) of the beading knife as product parameters in the beading process. Next, the training information displays the production execution system image of FIG. 16 to the user and allows the user to input process conditions based on what user have learned from the description.

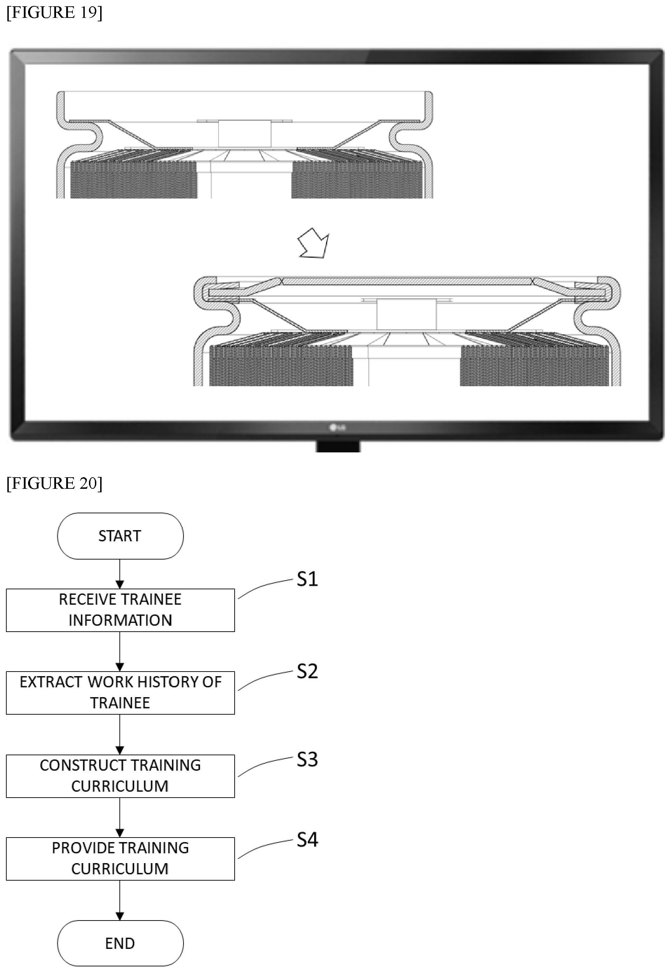

When the trainee J inputs the correct first condition, the training information illustrates the resulting product of the corresponding beading process corresponding to the inputted first condition as shown in FIG. 18, and the result of the resulting product that has underwent the next crimping process. Through such image, the trainee J may confirm that the length of the crimped portion is appropriate and that the crimping process is performed as designed. Meanwhile, when the trainee J inputs the second condition out of the correct range, the training information illustrates the resulting product of the corresponding beading process corresponding to the inputted second condition as shown in FIG. 19, and the result of the resulting product that has underwent the next crimping process. Through such image, trainee J may confirm the condition in which the length of the crimped portion is insufficient and a defect occurs in the crimped portion.

Trainee J, who visually confirms such image, understands the process conditions experientially. In this way, training information visually illustrates how the results of the process are produced by the process conditions inputted by the user, and visually illustrates what influence it has on the next process such that the user does not vaguely memorize the process conditions numerically, but remembers the same by associating the results of the depicted product with the process conditions. As a result, a training effect equivalent to that of actual field training may be obtained.

Terminal 30 may be configured to calculate the expected defect rate of the product based on the assembly quality for each process. Terminal 30 may select representative defect cases among the assembly processes based on the assembly quality and the expected defect rate, and provide additional training scenarios for these to trainee J. For example, the terminal 30 may provide trainee J with additional training information about process equipment where defects frequently occur based on the results of process condition adjustments performed by trainee J on each process equipment based on statistics on the training results of trainee J recorded in the server 20.

The server 20 accumulatively stores and manages training information performed by trainee J and the result information thereof. Whenever trainee J performs training on the terminal 30, the server 20 may receive training content and the result thereof from the terminal 30 and store the same in a database. Based on this, the server 20 may update the type, content and training scenario of training information and provide the same to the terminal 30.

The simulation system according to the embodiment reflects different task histories for each trainee J and plans and provides a training curriculum that allows each trainee J to quickly and efficiently receive training. In order to achieve this, the battery cell assembly process simulation system according to the embodiment includes training contents selection logic that extracts work history of a trainee corresponding to information of the trainee inputted through an input interface from a server 20 and constructs a training curriculum to be provided to the terminal based on the extracted work history.

The selection logic may be a software program. The selection logic may be executed on the server 20 or on the terminal 30. The selection logic may be implemented in the form of a computer program stored on a computer-readable storage medium. That is, the computer program may include instructions for implementing the selection logic, and the instructions of the program may be stored on a computer-readable storage medium. The computer program may include a mobile application.

According to the embodiment, the computer-readable storage medium may include magnetic media such as a hard disk, a floppy disk and a magnetic tape, optical media such as a CD-ROM, a DVD, magneto-optical media such as a floptical disk, and hardware devices specifically configured to store and execute computer program instructions such as a ROM, a RAM, a flash memory, etc. The computer program instructions may include machine language codes generated by a compiler and high-level language codes that may be executed by a computer using an interpreter, etc.

The training contents selection logic provides changed training information as training information for training equipment that has been partially changed from the existing equipment when it is confirmed that the trainee has experience with the existing equipment based on the experience information of the participating trainee.

Referring to FIG. 20, the method of operating the simulation system includes: a step S1 of receiving information about a trainee J; a step S2 of extracting work history of the trainee J corresponding to the received information; a step S3 of constructing a training curriculum by selecting training information for the training equipment based on the extracted work history; and a step S4 of providing the constructed training curriculum to the terminal 30 for training of the trainee.

The information of the trainee may be inputted through the input interface of the terminal 30. The inputted information of the trainee is transmitted to the server 20. The server 20 extracts the work history of the trainee corresponding to the received information. Referring to FIG. 12, the work history includes the experience of the trainee J regarding the equipment.

According to the first embodiment, the task of constructing a training curriculum based on the extracted work history may be performed in the server 20. That is, the training contents selection logic may be executed in the server 20. The training curriculum may be constructed by selecting appropriate training information based on the trainee's work history among the training information about the training equipment stored in the server 20. The server may provide the terminal with training information corresponding to the constructed training curriculum.

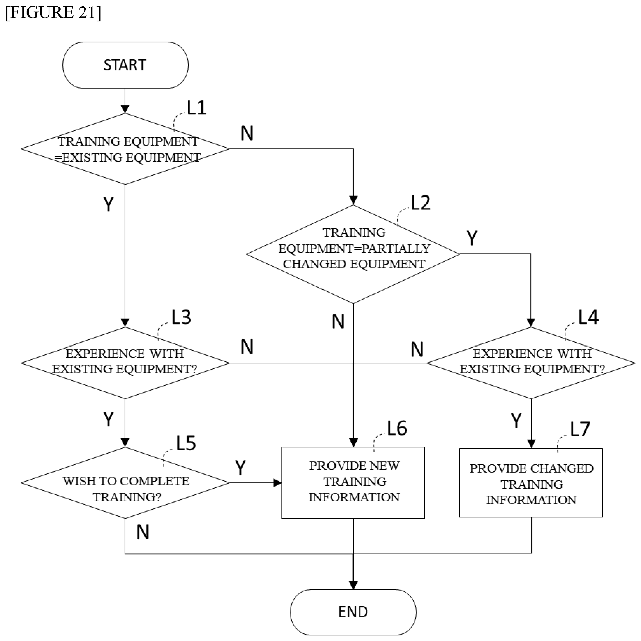

According to the second embodiment, the server 20 transmits the extracted work history of the trainee to the terminal 30, and the terminal 30 may construct a training curriculum based on the received work history. That is, the training contents selection logic may be executed in the terminal 30. Referring to FIG. 21, the training curriculum may be constructed by selecting appropriate training information based on the work history of the trainee among the training information for the training equipment stored in the server. The terminal 30 may request the training information corresponding to the constructed training curriculum from the server 20. Thereafter, the server 20 may provide the requested training information to the terminal 30.

The training contents selection logic may construct a curriculum that provides the trainee with information that the training equipment is identical to the existing equipment and the trainee has experience with the existing equipment based on the work history of the trainee J, and provides the trainee with an opportunity to choose whether to complete the training for the training equipment. This is referred to as first logics L1, L3 and L5 for convenience of description.

The training contents selection logic may construct the training curriculum by selecting changed training information based on the work history of the trainee J, for the training equipment that is partially changed from the existing equipment and for which the trainee has experience with the existing equipment, based on the premise that the equipment is partially changed from the existing equipment. This is referred to as second logics L2, L4 and L7 for convenience of description.

The training contents selection logic may construct the training curriculum by selecting new training information based on the work history of the trainee J, for the training equipment that is identical to the existing equipment the trainee does not have experience with or partially changed from the existing equipment that the trainee does not have experience with based on the premise that the equipment is new. This is referred to as third logics L2, L4 and L6 for convenience of description.

The training contents selection logic may construct the training curriculum by selecting new training information based on the premise that the equipment is new for the new training equipment among the training equipments. For convenience of description, this is referred to as fourth logics L1, L2 and L6.

For example, referring to FIGS. 11 and 12, the training contents selection logic constructs a training curriculum for trainee #1 according to the first logic for A equipment, according to the second logic for B2 equipment, according to the second logic for C2 equipment, according to the fourth logic for F equipment, and according to the first logic for E equipment.

In the case of trainee #2, the training curriculum is constructed according to the third logic for A equipment, according to the third logic for B2 equipment, according to the third logic for C2 equipment, according to the fourth logic for F equipment, and according to the third logic for E equipment.

In the case of trainee #3, the training curriculum is constructed according to the second logic for A equipment, according to the second logic for B2 equipment, according to the first logic for C2 equipment, according to the fourth logic for F equipment, and according to the first logic for E equipment.

According to the present invention, by optimally constructing the curriculum according to the experience status of trainee J, the most efficient training effect may be obtained.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell assembly process simulation system, comprising:
a server storing existing equipment information about an existing battery cell process equipment, basic information and training information about a training equipment comprising a training target battery cell process equipment, and work history of a participating trainee;
a terminal providing the training information to the participating trainee;
an input interface provided at the terminal for inputting information of the participating trainee; and
a training contents selection logic extracting a work history of a corresponding trainee corresponding to inputted information of the trainee and constructing a training curriculum to be provided to the terminal based on an extracted work history,
wherein the work history of the trainee stored in the server comprises an experience information about whether an experience with an existing equipment exists, and
the training contents selection logic provides different training information depending on the experience of the corresponding trainee with the existing equipment based on the experience information of the participating trainee.

2. The battery cell assembly process simulation system of claim 1, wherein the basic information about the training equipment comprises whether a corresponding training equipment is: an equipment identical to the existing equipment; an equipment partially changed from the existing equipment; and new equipment,
the training information about the training equipment comprises: a new training information based on a premise that the training equipment is the new equipment; and a changed training information based on a premise that the training equipment is the equipment partially changed from the existing equipment, and
the training contents selection logic provides the changed training information as the training information about the training equipment partially changed from the existing equipment when it is confirmed that the trainee has experience with the existing equipment based on the experience information of the participating trainee.

3. The battery cell assembly process simulation system of claim 1, wherein the training information comprises at least one of: a description of a process performed by the training equipment; a description of an equipment structure; a description of a method of operating the equipment; a description of a quality inspection; and information about executing a condition change of the equipment.

4. The battery cell assembly process simulation system of claim 1, wherein the training information comprises: a description of product parameters to be managed by training equipment; a description of a situation occurring when the product parameters are out of a management range; and a description of a method for managing the product parameters.

5. The battery cell assembly process simulation system of claim 1, wherein the training information comprises: information about 3D modeling the training equipment to correspond to actual equipment and implementing motions to correspond to operations of the actual equipment.

6. An operating method of a simulation system, comprising:
receiving information about a trainee;
extracting a work history of the trainee corresponding to received information;
constructing a training curriculum by selecting training information for the training equipment based on extracted work history; and
providing constructed training curriculum to a terminal for training of the trainee.

7. The operating method of simulation system of claim 6, wherein the training curriculum provides: for the training equipment that is identical to the existing equipment and that the trainee has experience on, information that the training equipment is identical to the existing equipment based on the work history of the trainee; and a selection step for selecting whether to complete a training for the training equipment.

8. The operating method of simulation system of claim 6, wherein the training curriculum is constructed by, for the training equipment that is partially changed from the existing equipment that the trainee has experience on based on the work history of the trainee, selecting the changed training information based on a premise that the training equipment is the equipment partially changed from the existing equipment.

9. The operating method of simulation system of claim 6, wherein the training curriculum is constructed by, for the training equipment that is identical to or partially changed from the existing equipment that the trainee does not have experience on based on the work history of the trainee, selecting the new training information based on the premise that the training equipment is the new equipment.

10. The operating method of simulation system of claim 6, wherein the training curriculum is constructed by, for the new equipment, selecting the new training information based on the premise that that the equipment is the new equipment.

11. The operating method of simulation system of claim 6, wherein the training information comprises a description of product parameters to be managed by the training equipment, a description of a situation occurring when the product parameters are out of a management range, and a description of a method for managing the product parameters.

12. The operating method of simulation system of claim 11, wherein the training information comprises training for the trainee to exercise a management method to bring the product parameters into the management range when the product parameters are out of the management range.

13. The operating method of simulation system of claim 12, wherein the training information comprises providing: a result data on whether the product parameters are within the management range as a result of the trainee exercising the management method; and a result data on an effect of a resulting product obtained by a process resulting from the management method exercised by the trainee on another process.

14. The operating method of simulation system of claim 13, wherein the result data comprises information embodying a 3D modeling of equipment of another process and a motion of the resulting product being processed on the equipment of another process.
